**Europäisches Patentamt**

**European Patent Office**

**Office européen des brevets**

(19)

(11) Veröffentlichungsnummer: **0 094 475**
· **B1**

(12) # EUROPÄISCHE PATENTSCHRIFT

(45) Veröffentlichungstag der Patentschrift:
14.05.86

(21) Anmeldenummer: 83100685.3

(22) Anmeldetag: 26.01.83

(51) Int. Cl.⁴: **B 60 K 26/04**, **F 02 D 11/10**,
**F 02 D 33/02**

(54) **Schaltungsanordnung zur nicht linearen Übertragung des einer Fahrpedalstellung eines Kraftfahrzeuges entsprechenden Sollwertsignals.**

(30) Priorität: **19.05.82 DE 3218909**

(43) Veröffentlichungstag der Anmeldung:
**23.11.83 Patentblatt 83/47**

(45) Bekanntmachung des Hinweises auf die Patenterteilung:
**14.05.86 Patentblatt 86/20**

(84) Benannte Vertragsstaaten:
**DE FR GB IT**

(56) Entgegenhaltungen:
**DE - A - 2 635 759**
**FR - A - 2 343 622**
**FR - A - 2 385 553**
**US - A - 3 407 793**
**US - A - 3 707 950**
**US - A - 3 709 626**
**US - A - 4 280 465**

**VDO-Querschnitt, März 1981, Frankfurt (DE), S. 1-19**

(73) Patentinhaber: **VDO Adolf Schindling AG,
Gräfstrasse 103, D-6000 Frankfurt/Main (DE)**

(72) Erfinder: **Collonia, Harald, Zum Talblick 12,
D-6246 Glashütten/Ts (DE)**

(74) Vertreter: **Könekamp, Herbert, Dipl.-Ing., Sodener
Strasse 9, D-6231 Schwalbach (DE)**

**Beschreibung**

Die Erfindung betrifft eine Schaltungsanordnung nach dem Oberbegriff des Anspruchs 1.

In Kraftfahrzeugen wird häufig eine nicht-lineare Übertragungscharakteristik zwischen dem Fahrpedal und einer das Kraftstoffluftgemisch beeinflussenden Drosselklappe oder einer Einspritzpumpe gewünscht, um eine feinfühlige Regulierung der Motorleistung zu ermöglichen. Diese nicht-lineare Übertragung ist bei mechanischen Übertragungselementen zwischen dem Fahrpedal und der Drosselklappe eine sogenannte Übertragungsprogression, da Veränderungen des Fahrpedals in der Nähe der Leerlaufstellung nur relativ schwach auf die Drosselklappe einwirken, während bei Weiterbetätigung des Fahrpedals die Einwirkung auf die Drosselklappe überproportional ansteigt. Die Regulierbarkeit ist hier zwar um die Leerlaufstellung herum befriedigend, nicht jedoch bei grösseren Fahrpedalauslenkungen. Bei einer elektrischen Gaspedal-Anlage — E-Gas —, bei der die jeweilige Fahrpedalstellung von einem elektrischen Sollwertgeber ermittelt und über eine Regelelektronik auf ein elektromotorisches Stellglied zur Drosselklappenbewegung übertragen wird, kann die Übertragungscharakteristik progressiv, linear oder degressiv programmiert werden (VDO-Querschnitt, März 1981, Frankfurt (DE), Seiten 1-19).

Zu der vorliegenden Erfindung gehört daher die Aufgabe, eine Schaltungsanordnung der eingangs genannten Gattung so weiterzubilden, dass die nicht-lineare Übertragung zwischen der Fahrpedalstellung und dem das Kraftstoffluftgemisch beeinflussenden Stellglied in der Weise verbessert wird, dass der Fahrer nicht nur in der Nähe der Leerlaufstellung, sondern auch bei stärkerer Betätigung des Fahrpedals die Leistung des Verbrennungsmotors feinfühlig regulieren soll, obwohl der insgesamt zugelassene Stellweg des Fahrpedals beibehalten wird. Es sei an dieser Stelle bemerkt, dass einer Vergrösserung des Stellwegs des Fahrpedals ergonomische Gründe entgegenstehen können.

Diese Aufgabe wird durch die im Anspruch 1 angegebene Erfindung gelöst.

Ein wesentlicher Vorteil ergibt sich aus der Lösung der Aufgabenstellung insofern, als bei fest vorgegebenem Betätigungsbereich des Fahrpedals bei jeder Veränderung der Fahrpedalstellung eine feinfühligere Regulierung der Motorleistung möglich ist, also auch dann, wenn das Fahrpedal in der Nähe der Vollaststellung betätigt wird. Die Aufmerksamkeit des Fahrers wird dadurch entlastet, dass sich nicht schon geringe Variationen der Fahrpedalstellung als überraschend starke Veränderungen in der von dem Motor erzeugten Leistung auswirken. Dadurch ist ein entspannteres Fahren möglich, obwohl nur ein verhältnismässig geringer gesamter Fahrpedalweg zur Einstellung der Motorleistung von Leerlauf bis zu Vollast ausreicht.

Ein weiterer Vorteil besteht darin, dass die elektronischen Bauelemente und Baugruppen zur Einstellung dieser nicht-linearen Übertragung verhältnismässig wenig aufwendig und — im Hinblick auf die geringe Anzahl der benötigten Elemente — störunanfällig sind. Es wird dadurch die Sicherheit beim Betrieb des Kraftfahrzeugs nicht beeinträchtigt.

Das Lösungsprinzip besteht darin, dass von der Signalspannung des entsprechend der Fahrpedalstellung erzeugten Sollwertsignals eine Teilspannung abgezogen wird, die proportional der Veränderung der Sollwertsignalspannung gebildet wird. Diese Teilspannung hat nur in einem begrenzten Bereich um einen Arbeitspunkt eines Operationsverstärkers eine lineare Abhängigkeit von dem Sollwertsignal und nimmt über diesen Aussteuerungsbereich hinaus eine konstante Grösse an. Der Arbeitspunkt des Operationsverstärkers, mit dem die Teilspannung aus dem Sollwertsignal erzeugt wird, lässt sich verzögert so nachführen, dass der Operationsverstärker für jede Fahrpedalsstellung nach Ablauf einer Verzögerungszeit in diesem Arbeitsbereich, d.h. möglichst weit von seiner Übersteuerungsgrenze, betrieben wird. In diesem Arbeitsbereich des Operationsverstärkers wird von der Sollwertsignalspannung eine verhältnismässig grosse Spannung abgezogen, so dass die Veränderung der resultierenden Ausgangsspannung der Schaltungsanordnung wesentlich niedriger als die Veränderung der Sollwertsignalspannung ist. Ausserhalb des Arbeitsbereichs des Operationsverstärkers wird bei jeder Veränderung der Fahrpedalstellung nur ein konstanter Betrag von der Sollwertsignalspannung abgezogen, d.h. die Übertragungscharakteristik der gesamten Schaltungsanordnung verläuft hier mit grösserer Steilheit.

Eine wenig aufwendige Realisierung der Schaltungsanordnung ist in dem Anspruch 2 angegeben, die im wesentlichen von einem gegengekoppelten Differenzverstärker Gebrauch macht.

Als zweckmässig hat sich eine Dimensionierung der in dem Anspruch 3 angegebenen Bauelemente in der Weise ergeben, dass der Differenzverstärker in seinem linearen Verstärkungsbereich bis 10%, maximal 20% des grössten Sollwertsignals ausgesteuert wird. Die sich daraus ergebende Spreizung der Übertragungscharakteristik hat sich für den Fahrer als besonders angenehm herausgestellt.

Ähnliches gilt für das Mass der Veränderung der Übertragungscharakteristik nach Anspruch 4, wonach durch eine Sollwertsignaländerung eine etwa hälftige Änderung des Ausgangssignals in Abhängigkeit von der Sollwertsignaländerung in dem Arbeitsbereich des Operationsverstärkers erreicht wird.

Eine wenig aufwendige Realisierung des Verzögerungsglieds, welches den Arbeitspunkt des Operationsverstärkers nachführt, ist in Anspruch 5 angegeben.

Die Erfindung wird im folgenden anhand der Zeichnung mit zwei Figuren erläutert. Es zeigt:

Fig. 1 — eine erfindungsgemässe Schaltungsanordnung zur nicht-linearen Übertragung der Fahrpedalstellung, und

Fig. 2 — eine Charakteristik, in der die Abhängigkeit der Ausgangsspannung der Schaltungsanordnung $U_a$ von der Sollwertsignalspannung $U_e$ angegeben ist.

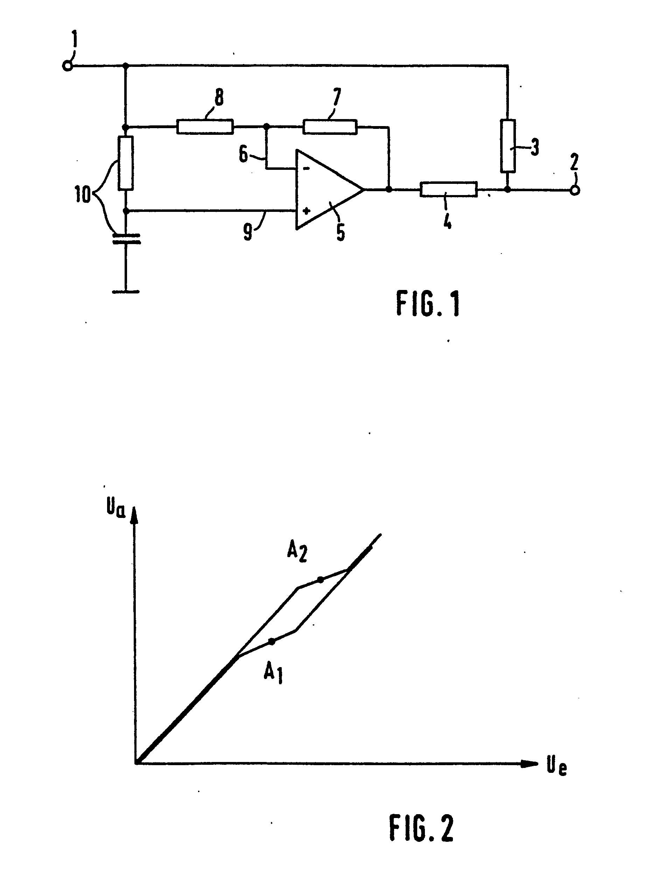

In Fig. 1 ist die Schaltungsanordnung zur nichtlinearen Übertragung der Fahrpedalstellung mit einer Klemme 1 versehen, die an einen nicht dargestellten elektrischen Stellungsgeber anschliessbar ist, der mit dem Fahrpedal gekoppelt ist. In die Klemme 1 wird die Sollwertsignalspannung gegenüber Massepotential eingespeist.

Die Sollwertsignalspannung wird von der Klemme 1 zu einer Ausgangsklemme 2 übertragen, an die das Stellorgan einer Drosselklappe angeschlossen werden kann. In dem direkten Übertragungsweg zwischen der Klemme 1 und der Ausgangsklemme 2 liegt ein Kopplungswiderstand 3. Ein weiterer Kopplungswiderstand 4 ist vom Ausgang eines Operationsverstärkers 5 zu der Ausgangsklemme 2 geführt.

Nach Massgabe der Dimensionierung der Kopplungswiderstände 3 und 4 wird von der Sollwertsignalspannung eine mit dem Operationsverstärker 5 gebildete Teilspannung der Sollwertsignalspannung abgezogen:

Hierzu ist ein erster Eingang des als Differenzverstärker ausgebildeten Operationsverstärkers 5 über einen Gegenkopplungswiderstand 7 mit dem Ausgang des Operationsverstärkers verbunden und über einen Eingangswiderstand 8 mit der Klemme 1 gekoppelt. Das Widerstandsverhältnis zwischen dem Gegenkopplungswiderstand 7 und dem Eingangswiderstand 8 ist so bemessen, dass der Differenzverstärker bis 10%, maximal aber bis 20% der grössten Sollwertsignalspannung ausgesteuert wird.

Der zweite Eingang 9 des Operationsverstärkers steht über eine Widerstands-Kondensatorkombination 10 mit der Eingangsklemme in Verbindung. Die Zeitkonstante dieser Widerstands-Kondensatorkombination ist kleiner als die rasche Veränderungsrate der Fahrpedalstellung durch den Fahrer bemessen.

Diese Schaltungsanordnung bewirkt, dass bei einer Veränderung der Fahrpedalstellung von der Sollwertsignalspannung eine der Fahrpedaländerung proportionalen Spannung abgezogen wird, solange der Operationsverstärker um seinen Arbeitspunkt $A_1$ bzw. $A_2$ in Fig. 2 betrieben wird. In diesem Bereich verläuft die Kennliniensteigung in Fig. 2 mit halber Steigung bezogen auf die Veränderung der Sollwertsignalspannung. Von der Sollwertsignalspannung wird unabhängig von der Fahrpedalstellung ein konstanter Betrag durch den Operationsverstärker abgezogen, wenn dieser ausserhalb seines linearen Kennlinienbereichs betrieben wird.

Durch die Widerstands-Kondensatorkombination 10 wird der Arbeitspunkt ständig an die aktuelle Sollwertsignalspannung nachgeführt, z.B. von dem Arbeitspunkt $A_1$ zum Arbeitspunkt $A_2$ in Fig. 2. Der Fahrer hat daher den Eindruck, dass eine Abflachung bzw. Spreizung der Kennlinie im gesamten Verstellbereich des Fahrpedals wirksam ist, obwohl der Verstellweg des Fahrpedals so klein wie sonst üblich ist.

## Patentansprüche

1. Schaltungsanordnung zur nicht-linearen Übertragung des einer Fahrpedalstellung eines Kraftfahrzeugs entsprechenden elektrischen Sollwertsignals, das von einem mit dem Fahrpedal gekoppelten Stellungsgeber abgegeben wird, auf ein das Kraftstoffluftgemisch eines Verbrennungsmotors beeinflussendes Stellglied, dadurch gekennzeichnet, dass ein mit dem Sollwertsignal gespeister Operationsverstärker (5) vorgesehen ist, der nur bis zu einem Teilbetrag des maximalen Sollwertsignals in seinem linearen Verstärkungsbereich aussteuerbar ist, dass der Arbeitspunkt ($A_1$, $A_2$ in Fig. 2) des Operationsverstärkers in dem linearen Verstärkungsbereich verzögert auf das jeweilige Sollwertsignal nachführbar ist, und dass der Ausgang des Operationsverstärkers (5) und der Stellungsgeber (1) über je einen Kopplungswiderstand (4, 3) das Ausgangssignal des Operationsverstärkers von dem Sollwertsignal subtrahierend gekoppelt sind (Ausgangsklemme 2).

2. Schaltungsanordnung nach Anspruch 1, dadurch gekennzeichnet, dass ein zu seinem ersten Eingang (6) gegengekoppelter Differenzverstärker als Operationsverstärker (5) an dem ersten Eingang (6) über einen Eingangswiderstand (8) und an seinem zweiten Eingang (9) über ein Verzögerungsglied (10) mit dem Stellungsgeber in Verbindung steht.

3. Schaltungsanordnung nach Anspruch 2, dadurch gekennzeichnet, dass das Widerstandsverhältnis zwischen dem Gegenkopplungswiderstand (7) und dem Eingangswiderstand (8) so bemessen ist, dass der Differenzverstärker in seinem linearen Verstärkungsbereich bis 10%, maximal 20% des Sollwertsignals ausgesteuert wird.

4. Schaltungsanordnung nach einem der Ansprüche 1 bis 3, gekennzeichnet durch eine derartige Bemessung der Kopplungswiderstände (3, 4) dass innerhalb des linearen Verstärkungsbereichs eine Änderung des Sollwertsignals eine Änderung des Ausgangssignals der Schaltungsanordnung um 50% der Sollwertsignaländerung hervorruft.

5. Schaltungsanordnung nach einem der Ansprüche 1 bis 4, gekennzeichnet durch eine Widerstands-Kondensatorkombination (10) als Verzögerungsglied.

## Claims

1. Circuit arrangement for the non-linear transmission, to a regulating element influencing the fuel-air mixture of an internal combustion engine, of the electrical desired-value signal which corresponds to an accelerator pedal position of a motor vehicle and which is emitted by a position signal emitter coupled with the accelerator pedal, characterised in that an operational amplifier (5) is provided which is supplied with the desired-value signal and which is modulatable only up to a fraction of the maximum desired-value signal in its linear amplification range, that the operating point ($A_1$, $A_2$ in Fig. 2) of the operational amplifier is adapted to be made to follow-up with delay the particular desired-value signal in question in the linear amplification range, and that the output of the operational amplifier (5) and the position signal emitter (1) are coupled via a coupling resistor in each case (4, 3) such as to subtract the output signal of the operational amplifier from the desired-value signal (output terminal 2).

2. Circuit arrangement according to claim 1, characterised in that the operational amplifier (5) is a differential amplifier coupled for negative feedback to its first input (6) and connected to the position signal emitter at the first input (6) via an input resistor (8) and at its second input (9) via a delay element (10).

3. Circuit arrangement according to claim 2, characterised in that the resistance ratio between the negative feedback resistor (7) and the input resistor (8) is made such that the differential amplifier is modulated in its linear amplification range up to 10%, at the most 20% of the desired-value signal.

4. Circuit arrangement according to one of claims 1 to 3, characterised by dimensioning the coupling resistors (3, 4) in such a manner that within the linear amplification range a modification of the desired-value signal brings about a modification of the output signal of the circuit arrangement to the extent of 50% of the desired-value signal modification.

5. Circuit arrangement according to one of claims 1 to 4, characterised by a resistor-capacitor combination (10) as the delay element.

### Revendications

1. Circuit de transmission non linéaire du signal électrique de valeurs de consigne qui correspond à une position de la pédale d'accélération d'un véhicule automobile et qui est délivré par un indicateur de positions couplé à la pédale d'accélération, cette transmission étant destinée à un organe de réglage influençant le mélange air-carburant d'un moteur à combustion interne, circuit caractérisé par le fait qu'il est prévu un amplificateur opérationnel (5) qui, alimenté par le signal de valeurs de consigne, peut être commandé, seulement jusqu'à une grandeur partielle du signal maximal de valeurs de consigne, dans sa plage d'amplification linéaire; par le fait que le point efficace ($A_1$, $A_2$ sur la figure 2) de l'amplificateur différentiel peut être ramené au signal de valeurs de consigne considéré, avec temporisation dans la plage d'amplification linéaire; et par le fait que la sortie de l'amplificateur opérationnel (5) et l'indicateur (1) de position sont à chaque fois couplés par l'intermédiaire d'une résistance de couplage (4, 3), en soustrayant du signal de valeurs de consigne le signal de sortie de l'amplificateur opérationnel (borne de sortie 2).

2. Circuit selon la revendication 1, caractérisé par le fait qu'un amplificateur différentiel, agissant en tant qu'amplificateur opérationnel (5) et couplé en réaction inverse à sa première entrée (6), est raccordé à l'indicateur de position par la première entrée (6) au moyen d'une résistance d'entrée (8), et par sa seconde entrée (9) à l'aide d'un organe de temporisation (10).

3. Circuit selon la revendication 2, caractérisé par le fait que le rapport résistif entre la résistance de contre-couplage (7) et la résistance d'entrée (8) est dimensionné de telle sorte que l'amplificateur différentiel soit commandé, dans sa plage d'amplification linéaire, jusqu'à 10%, au maximum 20% du signal de valeurs de consigne.

4. Circuit selon l'une des revendications 1 à 3, caractérisé par un dimensionnement des résistances de couplage (3, 4) tel que, dans les limites de la plage d'amplification linéaire, une variation du signal de valeurs de consigne provoque une variation du signal de sortie du circuit, de 50% de ladite variation du signal de valeurs de consigne.

5. Circuit selon l'une des revendications 1 à 4, caractérisé par une combinaison (10) résistance-condensateur en tant qu'organe de temporisation.

FIG.1

FIG.2